# EUROPEAN PATENT APPLICATION

(11) **EP 4 339 005 A1**
(43) Date of publication of application: **20.03.2024**
(21) Application number: 23197053.4
(22) Date of filing: 13.09.2023
(51) Int. Cl.: B60L 3/00, B60L 3/12, B60L 58/13, B60L 58/40, B60L 3/04, B60L 3/06, B60W 30/184, B60W 40/06, B60W 40/076

(54) **SYSTEM AND METHOD FOR MANAGING FUEL CELL POWER IN A HEAVY VEHICLE**

(30) Priority: 15.09.2022 IT 202200018912
(71) Applicant: IVECO S.P.A., 10156 Torino (IT)
(72) Inventor: SCHMIDT, Jahn, 10156 Torino (IT); MOELLER, Christoph, 10156 Torino (IT); GEBAUER, Jorg Felix, 10156 Torino (IT); CZESCHNER, Tobias, 10156 Torino (IT)
(74) Representative: Studio Torta S.p.A.

(57) **Abstract**

Vehicle (1) comprising a fuel cell engine configured to provide power for allowing travel of the vehicle (1) on a road (R) and operation of its utilities, the fuel cell engine comprising a fuel cell module, at least an electric machine and battery means, the vehicle (1) comprising electrical level sensor means configured to detect state of charge, SOC, of the battery means and power sensor means configured to detect the power transferred between the fuel cell module and the at least an electric machine, the vehicle (1) further comprising navigation means configured to communicate with satellite means to provide details related to the route (R) with respect to a destination set by the vehicle driver, the vehicle (1) comprise a power control system comprising an electronic control unit comprising elaboration means configured to acquire data from navigation means, power sensor means and energy level sensor means, elaborate such data and control consequently the power transfer among the fuel cell engine elements.

## Description

### CROSS-REFERENCE TO RELATED APPLICATIONS

This patent application claims priority from Italian patent application no. 102022000018912 filed on September 15, 2022, the entire disclosure of which is incorporated herein by reference.

### TECHNICAL FIELD

The present invention concerns a system and a method for managing fuel cell in a vehicle.

The present invention finds its preferred, although not exclusive, application in heavy vehicle such as commercial vehicle like trucks. Reference will be made to this application by way of example below.

### BACKGROUND OF THE INVENTION

The vehicle industries is developing more and more solutions that can provide power instead of classical internal combustion engines in order to reduce pollutant emissions.

One of the used solution is the use of fuel cells. Fuel cells are configured to use hydrogen as fuel and produce electrical energy that can be used by electrical machines/electrical batteries in order to guarantee the vehicle operation.

Such solution is optimal in commercial vehicles such as trucks because reduce the need to recharge battery means as in purely electric vehicles.

A drawback of fuel cells is that these tends to reduce their lifetime in function of the maximum power use, their temperature and power dynamics.

Accordingly, the fuel cells tends to be used below their maximum power to reduce their wear and the electrical batteries are used to compensate for the needed power.

However, in some driving situations, such as high load and high slope routes, the requested power is high and therefore there is absolute need to use fuel cells at their maximum power.

On the other hand, if the maximum power is not used, the vehicle is obliged to proceed at a very slow speed in order to avoid overstress fuel cells.

Another possible solution to the problem could be the use of bigger capacity electrical batteries. However, such solution will lead to an unsustainable weight of the vehicle.

Furthermore, the use of fuel cell for charging electric battery is a particularly noisy activity. Therefore, such operation should not be executed in urban context. However, in some case should be necessary to allow a correct operation of the vehicle.

In view of the above, the need is felt to improve the management of power in fuel cell vehicles in order to increase the useful life of fuel cells without having lack of power with respect to the requested power to allow vehicle mission.

Moreover, it is felt to avoid the use of recharge of the electrical batteries via fuel cell module in urban context to reduce the noise level.

An aim of the present invention is to satisfy the above mentioned needs in a cost-effective and optimized manner.

### SUMMARY OF THE INVENTION

The aforementioned aim is reached by a fuel cell power control system and a related power management method as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective schematic view of a fuel cell vehicle driving along a variable slope route;
- Figure 2 is schematic representation of the power control system according to the invention;
- Figure 3 is a schematic diagram block representing the steps of a power control system according to the invention; and
- Figures 4A, 4B are tables disclosing operational values of a fuel cell vehicle controlled via the system and method according to the invention.

### DETAILED DESCRIPTION OF THE INVENTION

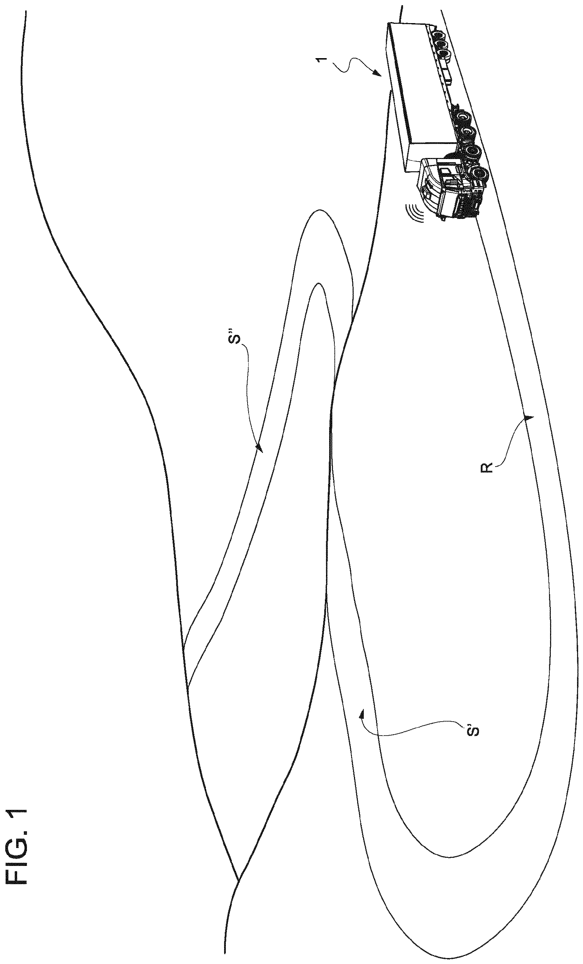

Figure 1 exemplarily shows a commercial vehicle 1 such as a truck driving on a route R that is characterized by a first slope S' and a second slope S" longer and higher than the first slope S'.

The vehicle 1 is provided with navigation means 2 configured to communicate with satellite means configured to provide details on the path of route R followed by the vehicle 1. Such navigation means 2 may comprise a GPS system.

The navigation means 2 allow to the drive to set a destination and follow the suggested route R via a navigator installed in the vehicle cab, as known.

The vehicle 1 is furthermore provided with a fuel cell engine (not shown) comprising a fuel cell module, battery means and at least one electric machine configured to allow generation of electrical power and transformation of such electrical power into mechanical torque at vehicle wheels to allow driving of the vehicle 1. Clearly the generated electrical power may be used for operation of other utilities of the vehicle and not further described into detail.

The battery means are advantageously provided with energy level sensor means configured to detect the state of charge, SOC, of battery means.

The fuel cell module and the at least one electric machine are advantageously provided with power sensor means configured to detect the transferred power.

The vehicle 1 is provided with a power control system 5 comprising an electronic control unit 6, e.g. the ECU of the vehicle, comprising elaboration means configured acquire data from navigation means, power sensor means and energy level sensor means, elaborate such data and control consequently the power transfer among the fuel cell engine elements.

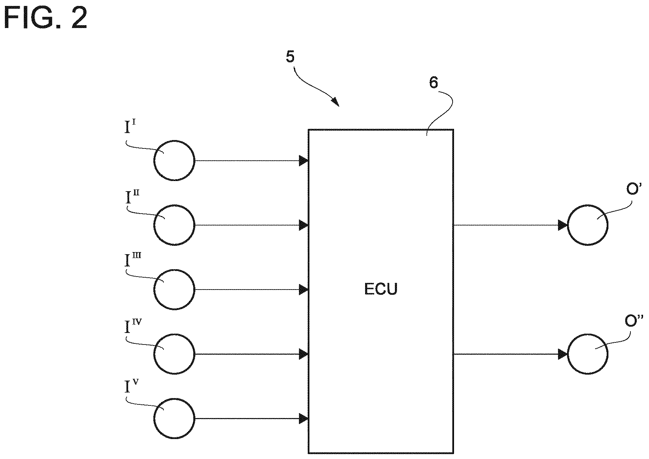

In particular, (figure 2) the electronic control unit 6 is configured to acquire the following inputs:
- A first input signal I^{I} provided by navigation means and comprising data related to the current position of the vehicle and the characteristics of the route to be travelled;
- A second input signal I^{II} provided by energy level sensor means and representing the SOC of battery means;
- A third input signal I^{III} provided by power sensor means and representing the power transfer between fuel cell module and electrical machine;
- A fourth input signal I^{IV} provided by load sensor means and representing the load transported by the vehicle;
- A fifth input signal I^{V} indicating a requested speed imparted by the user, e.g. by a pedal of the vehicle.

The electronic control unit 6 is configured to provide the following outputs:
- A first output O' configured to control the operation of the at least one electric machine; and
- A second output O" configured to control the operation of the fuel cell module.

The data related to the current position of the vehicle and the characteristics of the route comprises essentially:
- The current position x of the vehicle; and/or
- The height and inclination of the route that has to be travelled by the vehicle according to the elaborated path after current position x till the destination; and/or
- The presence of urban agglomerates near the route.

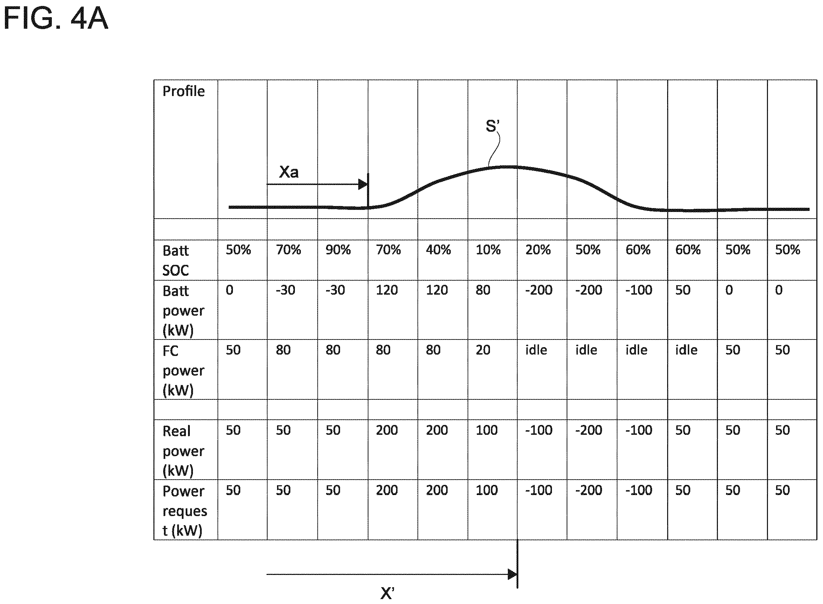

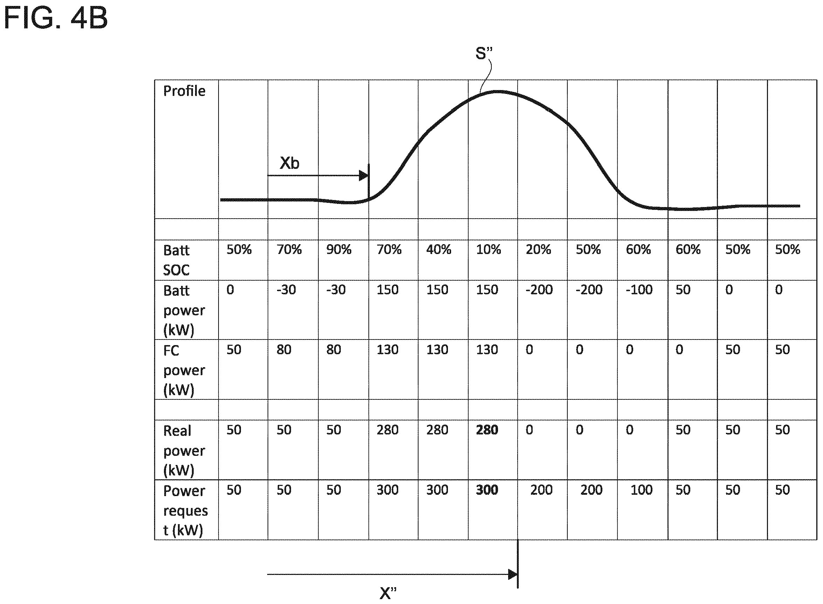

The operation of the embodiment of the power control system according to the invention as described above is the following, making reference to figures 1, 4A, 4B.

Vehicle 1 is travelling along road R following a destination imparted by the user. The road R presents a first and a second slope S', S" whose height is known by navigation means data. At a preset distance before the slope S', S" the electronic control unit starts the power managing method.

Making reference to the first slope S', figure 4A, the electronic control unit calculates the power request of the vehicle within a distance X comprising the top of the slope of first slope S' by a mathematical model of the vehicle taking into account vehicle load, current requested speed and road slope profile. At a preset distance xa before the start of first slope S' the electronic control unit control fuel cell module to provide a power greater than the current power request in order to precharge the battery means The exceeding power quantity is calculated in order to reach a predetermined SOC level before start of the first slope S', e.g. 900. When the first slope S' starts, the electrical machine is controlled to provide a torque to sustain the slope. In the present case the fuel cell modules provides the same power than before, i.e. well below its maximum allowable power to avoid waste of useful life, and the remaining part of the needed power is transferred from battery means to electrical machine that provide the remaining portion of the requested torque. After the top of the slope, the fuel cell module is in idle and the electric machine works as generator, as per se known, carried by wheels of the vehicle to charge again battery means.

Making reference to the second slope S", figure 4B, the electronic control unit calculates the power request of the vehicle within a distance x" comprising the top of the slope of second slope S" by a mathematical model of the vehicle taking into account vehicle load, current requested speed and road slope profile. At a preset distance xb before the start of second slope S" the electronic control unit control fuel cell module to provide a power greater than the current power request in order to precharge battery. The exceeding power quantity is calculated in order to reach a predetermined SOC level before start of the slope S", e.g. 900. When the second slope S" starts, the fuel cell module is controlled to provide a power to sustain the slope. In the present case the fuel cell module is requested to provide a higher power that may be near or higher to the maximum allowable power, by shortly wasting of useful life, and the remaining part of the needed power is transferred from battery means to electrical machine that provide the remaining portion of the requested power. The power output of the electric machine is limited in that way, that the stored energy in the battery in combination with fuel cell power is sufficient to reach the end of the slope. After the top of the slope, the fuel cell module is in idle and the electric machine works again as generator, as per se known, carried by wheels of the vehicle to charge again battery means. In this case, the requested power of the slope would be higher with respect to the maximum power provided by the electric motor. However, the difference is minimal and therefore the speed target imparted by the user would not be met but for a very small, negligible, quantity.

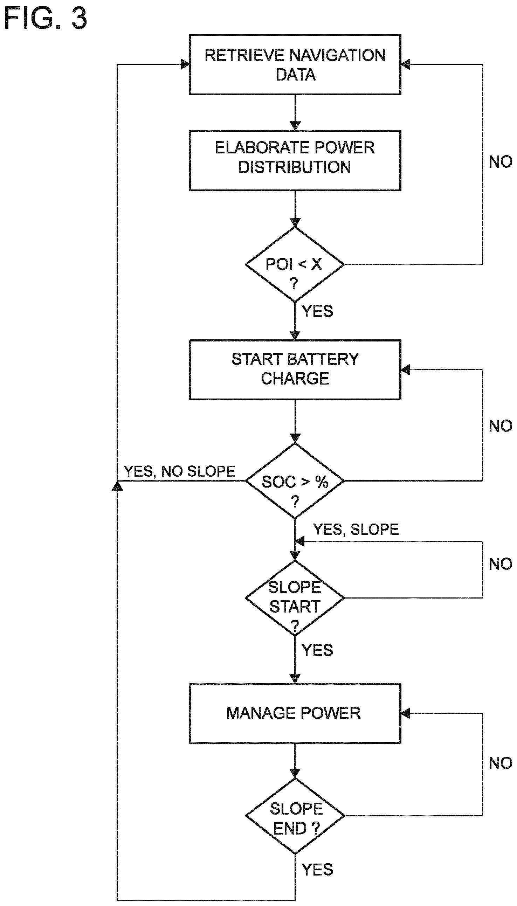

A further operation, not disclosed in drawings may be the passage of the vehicle within an urban context. In such case, a preset distance before the start of urban context, if the SOC of battery means is below a predetermined threshold, the electronic control unit control fuel cell module to provide a power greater than the current power request in order to recharge battery means. The operation is carried out optimizing the charge before entering in the urban context. In view of the above operation, the invention further relates to a method for managing power (schematized in figure 3) in a fuel cell vehicle as described above and comprising the following steps:
- i) retrieve data from navigation means;
- ii) elaborate a power distribution in function of the data retrieved at step i);
- iii) verify if a point of interest is comprised within a preset distance, if no, return to step i) otherwise proceed with the further step;
- iv) control fuel cell module to provide a power greater to the requested one to charge electrical batteries;
- v) verify if the SOC is greater than a preset threshold, if no return to step iv), if yes and the point of interest is not a slope, return to step i), if yes and the point of interest is a slope proceed with the further step;
- vi) verify if the slope starts, if no continue the monitoring, if yes proceed with the further step;
- vii) manage the power between the fuel cell module, the electrical machine and battery means;
- viii) verify if the slope change ends, if no return to step vii), otherwise return to step i).

The power distribution may be elaborated according to any known dynamic model taking into account the requested speed by the user, the characteristic of the road, the SOC of the battery means, the load of the vehicle and the maximum allowable power of fuel cell module and of electrical machine.

In particular, the maximum allowable power of fuel cell module and of electrical machine are memorized in the electronic control unit. The electronic control unit further memorized a minimum SOC threshold that is taken into account to calculate the aforementioned power distribution so that, at worst, the SOC reach such minimum SOC threshold at the top of the slope.

The power management step comprises the increase of power provided by fuel cell module to generate electrical energy to be stored in battery means. The value of power provided by fuel cell module is lower than the maximum allowable power of the fuel cell module.

In case of need greater with respect to the battery capacity and due to maximum allowable power of fuel cell module and of electrical machine, the value of power output provided by electrical machine is limited in order to not reach such maximum allowable powers.

The limitation is calculated by the electronic control unit taking into account the speed of the vehicle so that such speed will decrease during the travel on the slope of a preset percentage. Such preset percentage may be memorized in the electronic control unit or settable by the user.

In view of the foregoing, the advantages of a power control system and a related power management method according to the invention are apparent.

Thanks to the provided control system it is possible to optimize the power management by reducing the wear of fuel cell module since it is avoided to use this latter to produce high power values.

In parallel, the fuel cell module dynamic is controlled to be smooth and to charge electrical batteries when needed therefore avoiding to increase their storage power and therefore their dimensions.

Thanks to the use of navigation data, the vehicle can predict in advance the presence of point of interest such as slope or urban context thereby anticipating any action to optimize power torque and to avoid production of noise in urban context.

It is clear that modifications can be made to the described power control system and related power management method which do not extend beyond the scope of protection defined by the claims.

For example, the point of interest may vary. Furthermore, the fuel cell engine architecture may be of any typology.

The estimation of power distribution may be carried out with any suitable mathematical model taking into account the navigation data and vehicular data.

## Claims

1. Vehicle (1) comprising a fuel cell engine configured to provide power for allowing travel of said vehicle (1) on a road (R) and operation of its utilities, said fuel cell engine comprising a fuel cell module, at least an electric machine and battery means, said vehicle comprising electrical level sensor means configured to detect state of charge, SOC, of said battery means and power sensor means configured to detect the power transferred between said fuel cell module and said at least an electric machine, said vehicle (1) further comprising navigation means (2) configured to communicate with satellite means to provide details related to said route (R) with respect to a destination set by the vehicle driver,
said vehicle (1) comprise a power control system (5) comprising an electronic control unit (6) comprising elaboration means configured to acquire data from navigation means, power sensor means and energy level sensor means, elaborate such data and control consequently the power transfer among the fuel cell engine elements.
wherein characteristics of the route comprises:
- The current position (x) of the vehicle; and
- The height and inclination of the route that has to be travelled by the vehicle according to the elaborated path after current position (x) till the destination; and
- The presence of urban agglomerates near the route.

2. Vehicle according to claim 1, wherein said electronic control unit is configured to acquire the following inputs:
- A first input signal (I^{I} )provided by navigation means and comprising data related to the current position of the vehicle (1) and the characteristics of the route to be travelled;
- A second input signal (I^{II} ) provided by energy level sensor means and representing the SOC of battery means;
- A third input signal (I^{III} ) provided by power sensor means and representing the power transfer between fuel cell module and electrical machine;
- A fourth input signal (I^{IV} ) provided by load sensor means and representing the load transported by the vehicle;
- A fifth input signal (I^{V} ) indicating a requested speed imparted by the user.

3. Vehicle according to claim 1 or 2, wherein said electronic control unit is configured to provide the following outputs:
- A first output O' configured to control the operation of the at least one electric machine; and
- A second output O" configured to control the operation of the fuel cell module.

4. Vehicle according to any of the preceding claims, wherein said electronic control unit is the ECU of said vehicle.

5. Vehicle according to any of the preceding claims wherein said navigation means (2) comprise a GPS system.

6. Method for managing power in a fuel cell vehicle according to any of the preceding claims and comprising the following steps:
- i) retrieve data from navigation means;
- ii) elaborate a power distribution in function of the data retrieved at step i);
- iii) verify if a point of interest is comprised within a preset distance, if no, return to step i) otherwise proceed with the further step;
- iv) control fuel cell module to provide a power greater to the requested one to charge electrical batteries;
- v) verify if the SOC is greater than a preset threshold, if no return to step iv), if yes and the point of interest is not a slope, return to step i), if yes and the point of interest is a slope proceed with the further step;
- vi) verify if the slope starts, if no continue the monitoring, if yes proceed with the further step;
- vii) manage the power between the fuel cell module, the electrical machine and battery means;
- viii) verify if the slope change ends, if no return to step vii), otherwise return to step i).
, wherein the power distribution is elaborated according to a dynamic model taking into account the requested speed by the user, the characteristic of the route, the SOC of the battery means, the load of the vehicle and the maximum allowable power of fuel cell module and of electrical machine, wherein characteristics of the route comprises:
- The current position (x) of the vehicle; and
- The height and inclination of the route that has to be travelled by the vehicle according to the elaborated path after current position (x) till the destination; and
- The presence of urban agglomerates near the route.

7. Method according to claim 6, wherein said maximum allowable power of fuel cell module and of electrical machine are memorized in said electronic control unit.

8. Method according to claim 6 or 7, wherein said power distribution is calculated taking into account a minimum SOC threshold of said battery means.

9. Method according to any of claims 6 to 8, wherein the power management step comprises the increase of power provided by fuel cell module to generate electrical energy to be stored in battery means.

10. Method according to claim 9, wherein said value of power provided by said fuel cell module is lower than the maximum allowable power of the fuel cell module.

11. Method according to any of claims 6 to 10, wherein if the requested power is greater with respect to the capacity due to maximum allowable power of fuel cell module and of electrical machine, the value of power provided by electric motor is limited.

12. Method according claim 11, wherein said limitation is calculated taking into account the speed of the vehicle so that such speed will decrease during the travel of a preset percentage.

13. Method according to claim 12, wherein such preset percentage is memorized in the electronic control unit or is settable by the user.
